# EUROPEAN PATENT APPLICATION

(11) **EP 4 745 059 A1**
(43) Date of publication of application: **20.05.2026**
(21) Application number: 25210723.0
(22) Date of filing: 23.10.2025
(51) Int. Cl.: B65G 27/04, B65G 27/08

(54) **VIBRATORY CONVEYANCE DEVICE**

(30) Priority: 15.11.2024 JP 2024200133
(71) Applicant: Ishida Co., Ltd., Kyoto-shi Kyoto 606-8392 (JP)
(72) Inventor: KIKUCHI, Kohei, Ritto-shi, Shiga, 520-3026 (JP)
(74) Representative: Gill Jennings & Every LLP

(57) **Abstract**

Providing a vibratory conveyance device in which the occurrence of wear of parts associated with contact between a trough and a mounting mechanism can be reduced. A vibratory conveyance device (100) has a trough (110) that conveys article, a vibrator (200), and a mounting mechanism (140). The trough extends between a first end (112) and a second end (114). The vibrator vibrates the trough to convey the article in the trough. The mounting mechanism detachably mounts the trough to the vibrator. The mounting mechanism has a latching portion (160) and a magnet (150). The latching portion latches the first end side of the trough. The magnet attracts and holds a bottom surface (110a) of the trough on the second end side. In a state where the trough has been mounted to the vibrator, the magnet attracts and holds the trough without contacting the bottom surface of the trough.

## Description

### Technical Field

This invention relates to a vibratory conveyance device that vibrates a trough to convey articles in the trough.

### Related Art

In vibratory conveyance devices that vibrate a trough to convey articles in the trough, the trough is mounted via a mounting mechanism to a vibrator. In conventional vibratory conveyance devices, for purposes such as maintenance, the trough is detachably mounted to the vibrator by a fastener (e.g., a draw latch) or a band. For example, Patent Document 1 (JP-U No. H1-147320) discloses using a fastener to secure the trough to a mounting base of the mounting mechanism connected to the vibrator.

### SUMMARY

### Technical Problem

However, in such conventional vibratory conveyance devices, because there are many places of contact between the trough and the mounting mechanism and the area of contact between the trough and the mounting mechanism tends to increase, during transport and during use of the vibratory conveyance device, wear of the trough may occur at the parts where the trough and the mounting mechanism contact each other.

The object of this invention to provide a vibratory conveyance device in which it can reduce the occurrence of wear of parts associated with contact between the trough and the mounting mechanism.

### Solution to Problem

A vibratory conveyance device of a first aspect of the invention comprises a trough configured to convey an article, a vibrator, and a mounting mechanism. The trough extends between a first end and a second end. The vibrator vibrates the trough to convey the article in the trough. The mounting mechanism detachably mounts the trough to the vibrator. The mounting mechanism has a latching portion and a magnet. The latching portion latches the first end side of the trough. The magnet is configured to attract and hold a bottom surface of the trough on the second end side. In a case where the trough has been mounted to the vibrator, the magnet attracts and holds the trough without contacting the bottom surface of the trough.

In the vibratory conveyance device of the first aspect, using the magnet to attract and hold the bottom surface of the trough on the second end side can reduce the area of contact between the trough and the mounting mechanism and thus reduce wear of parts associated with contact between the trough and the mounting mechanism.

A vibratory conveyance device of a second aspect of the invention is the vibratory conveyance device of the first aspect, wherein the trough is configured to convey the article from the first end side to the second end side.

A vibratory conveyance device of a third aspect of the invention is the vibratory conveyance device of the first aspect or the second aspect, wherein a length of the magnet along a conveyance direction of the article in the trough is longer than a length of the magnet in a width direction of the trough orthogonal to the conveyance direction.

In the vibratory conveyance device of the third aspect, the trough can be strongly held by the magnet in the conveyance direction of the trough. Furthermore, in this vibratory conveyance device, the width of the magnet in the width direction of the trough is relatively small, so an increase in the size of the vibratory conveyance device in the width direction of the trough can be inhibited.

A vibratory conveyance device of a fourth aspect of the invention is the vibratory conveyance device of any of the first aspect to the third aspect, further comprising a coating member made of resin that coats the magnet.

In the vibratory conveyance device of the fourth aspect, coating the magnet with the coating member made of resin can inhibit oxidation of the magnet and thus inhibit a reduction in the attractive force of the magnet.

A vibratory conveyance device of a fifth aspect of the invention is the vibratory conveyance device of the fourth aspect, further comprising a nonmagnetic cover member that is disposed between the trough and the coating member.

In the vibratory conveyance device of the fifth aspect, the cover member can inhibit damage to the coating member caused by the trough and the coating member contacting each other when the trough is mounted to and detached from the mounting mechanism.

A vibratory conveyance device of a sixth aspect of the invention is the vibratory conveyance device of any of the first aspect to the fifth aspect, wherein the trough has a protrusion on its bottom surface. The protrusion is disposed between the magnet and the first end of the trough in a conveyance direction of the article in the trough. The protrusion extends downward below an upper surface of the magnet.

If the bottom surface of the trough does not have the protrusion and the position of the trough is misaligned in the conveyance direction of the article in the trough when mounting the trough to the mounting mechanism, there is the concern that the magnet that should contactlessly attract the trough will attract the bottom surface of the trough and lead the worker to mistakenly perceive that the trough has been appropriately mounted to the mounting mechanism.

By contrast, in the vibratory conveyance device of the sixth aspect, if the position of the trough is misaligned in the conveyance direction of the article in the trough when mounting the trough to the mounting mechanism, the trough will not be able to be mounted to the mounting mechanism because the protrusion will contact the magnet, so incorrect mounting of the trough such as described above is unlikely to occur.

A vibratory conveyance device of a seventh aspect of the invention is the vibratory conveyance device of any of the first aspect to the sixth aspect, wherein the latching portion is a receiving portion configured to receive an insertion portion provided on the trough.

### Advantageous Effects of Invention

In the vibratory conveyance device pertaining to this invention, the area of contact between the trough and the mounting mechanism can be reduced, thereby reducing wear of parts associated with contact between the trough and the mounting mechanism.

### BRIEF DESCRIPTION OF THE DRAWINGS

FIG. 1 is a perspective view of a combination weighing apparatus having a vibratory conveyance device of an embodiment of the invention;
FIG. 2 is a schematic configuration diagram of the combination weighing apparatus of FIG. 1;
FIG. 3 is a side view of one of vibratory conveyance devices of the combination weighing apparatus of FIG. 1;
FIG. 4 is a perspective view showing a trough and a mounting mechanism of the vibratory conveyance device of FIG. 3 as viewed from the lower right rear side;
FIG. 5 is a side view showing the trough and the mounting mechanism of the vibratory conveyance device of FIG. 3 as viewed from the right side;
FIG. 6 is a plan view showing a mounting mechanism of the trough of the vibratory conveyance device of FIG. 3 as viewed from above;
FIG. 7 is a plan view showing the mounting mechanism of the vibratory conveyance device of FIG. 3 as viewed from above;
FIG. 8 is a perspective view showing the trough being mounted to the mounting mechanism in the vibratory conveyance device of FIG. 3 as viewed from the upper right rear side;
FIG. 9 is a side view showing the trough being mounted to the mounting mechanism in the vibratory conveyance device of FIG. 3 as viewed from the right side;
FIG. 10 is a side view showing the trough after being mounted to the mounting mechanism in the vibratory conveyance device of FIG. 3 as viewed from the right side; and
FIG. 11 is a schematic longitudinal sectional view in which a magnet part of the mounting mechanism of the vibratory conveyance device of FIG. 3 is cut along a front and rear direction.

### DETAILED DESCRIPTION

An embodiment of the invention will now be described below with reference to the drawings. The following embodiment is a specific example of the invention and is not intended to limit the technical scope of the invention.

It will be noted that in the following description there are cases where expressions such as perpendicular, orthogonal, and horizontal are used to describe directions and positional relationships, and these include not only cases where that which these expressions describe are strictly perpendicular, orthogonal, or horizontal but also cases where that which these expressions describe are substantially perpendicular, orthogonal, or horizontal.

Furthermore, in the following description, expressions such as "upper," "lower," "left," "right," "front," and "rear" are used for convenience of description, and the directions indicated by these expressions follow the directions of the arrows in the drawings.

### (1) Combination Weighing Apparatus

A combination weighing apparatus 10 having a vibratory conveyance device 100 of an embodiment will now be described.

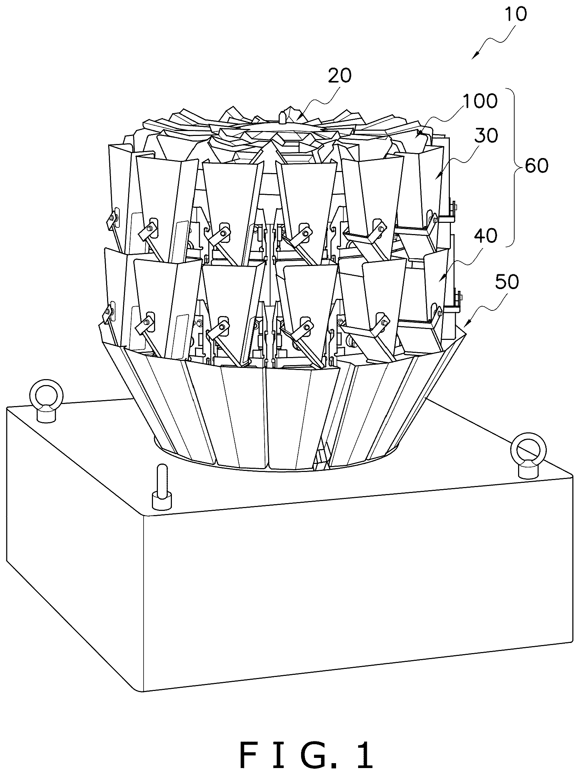

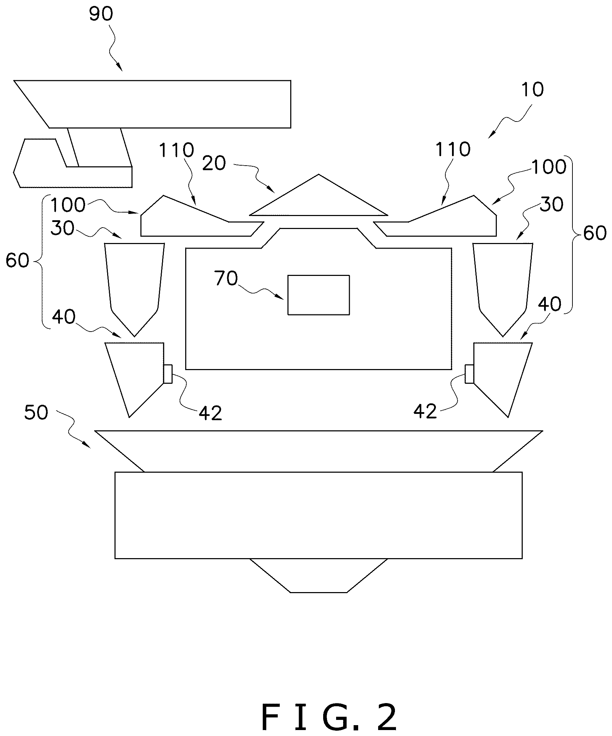

As shown in FIG. 1 and FIG. 2, the combination weighing apparatus 10 mainly has a dispersion table 20, plural sets of conveying and weighing mechanisms 60, a collection and discharge chute 50, and a control device 70. Each set of conveying and weighing mechanisms 60 includes a vibratory conveyance device 100, a pool hopper 30, and a weighing hopper 40. The plural sets of conveying and weighing mechanisms 60 (in other words, the vibratory conveyance devices 100, the pool hoppers 30, and the weighing hoppers 40) are arranged next to each other in the circumferential direction about the dispersion table 20 as viewed from above (see FIG. 1).

The dispersion table 20 is formed in a conical shape (see FIG. 2). The dispersion table 20 is vibrated by a vibrator not shown in the drawings to disperse in the circumferential direction and convey outward in the radial direction articles that have been fed onto the dispersion table 20 from a feed apparatus 90 and feed the articles to the vibratory conveyance devices 100 of the plural sets of conveying and weighing mechanisms 60.

It will be noted that the article handled by the combination weighing apparatus 10 is powdered or granular article such as tea leaves, dried soup ingredients, seasonings, tablets, or capsules, though this is not intended to limit the type of the article.

The vibratory conveyance device 100 of each set of conveying and weighing mechanisms 60 has a trough 110 that extends from the vicinity of the dispersion table 20 radially outward to directly above the pool hopper 30 of that set of conveying and weighing mechanisms 60 (see FIG. 2). The plural vibratory conveyance devices 100 extend radially from the dispersion table 20. The vibratory conveyance device 100 vibrates the trough 110 to convey, from the dispersion table 20 radially outward to the pool hopper 30, the articles that have been fed from the dispersion table 20 into the trough 110. The vibratory conveyance device 100 will be described below.

The pool hopper 30 of each set of conveying and weighing mechanisms 60 temporarily retains the articles fed from the vibratory conveyance device 100. The lower portion of the pool hopper 30 is provided with a gate (not shown in the drawings). When the gate is opened, the pool hopper 30 of each set of conveying and weighing mechanisms 60 feeds the articles in the pool hopper 30 to the weighing hopper 40 of that set of conveying and weighing mechanisms 60 which is disposed directly under the pool hopper 30.

The weighing hopper 40 of each set of conveying and weighing mechanisms 60 temporarily retains the articles fed from the pool hopper 30 and measures the weight of the articles in the weighing hopper 40. The lower portion of the weighing hopper 40 is provided with a gate (not shown in the drawings). When the gate is opened, the weighing hopper 40 feeds the articles in the weighing hopper 40 to the collection and discharge chute 50 disposed directly under the weighing hopper 40.

The collection and discharge chute 50 is disposed so as to receive the articles fed by the weighing hoppers 40 of the plural sets of conveying and weighing mechanisms 60. The collection and discharge chute 50 collects the articles fed from the plural weighing hoppers 40 and discharges the articles to the outside of the combination weighing apparatus 10. Though this is not intended to limit its application, the articles discharged to the outside of the combination weighing apparatus 10 is fed to, for example, a bagmaking and packaging machine (not shown in the drawings) installed under the collection and discharge chute 50.

The control device 70 has a CPU and memories such as a ROM and a RAM (not shown in the drawings). The control device 70 is electrically connected to each part of the combination weighing apparatus 10, such as the vibrator (not shown in the drawings) of the dispersion table 20, vibrators 200 of the vibratory conveyance devices 100, motors (not shown in the drawings) that activate the gates of the pool hoppers 30 and the weighing hoppers 40, and weight sensors 42 that are provided in the weighing hoppers 40 and measure the weights of the article in the weighing hoppers 40. The control device 70 controls each part of the combination weighing apparatus 10 as a result of the CPU executing programs stored in the memories.

The combination weighing apparatus 10 is controlled by the control device 70 to specifically perform the following operations.

The dispersion table 20 of the combination weighing apparatus 10 uses vibrations to disperse and feed to the plural vibratory conveyance devices 100 the articles fed from the feed apparatus 90. Each vibratory conveyance device 100 conveys to the pool hopper 30 of the set to which that vibratory conveyance device 100 belongs, and feeds to that pool hopper 30, the articles fed from the dispersion table 20. The articles fed to the pool hoppers 30 is delivered to the weighing hoppers 40 disposed under those pool hoppers 30. The control device 70 receives weighing results from the weight sensors 42 of the plural weighing hoppers 40, performs a combination calculation on the weighing values of the articles in the weighing hoppers 40, and selects a combination of the article with which the results of the combination calculation fall within a predetermined allowable range. The articles in the weighing hoppers 40 included in the selected combination is discharged to the collection and discharge chute 50. The article discharged to the collection and discharge chute 50 is fed to, for example, a bagmaking and packaging machine installed downstream of the combination weighing apparatus 10.

### (2) Vibratory Conveyance Devices

The vibratory conveyance devices 100 will now be described in detail. The plural vibratory conveyance devices 100 that the combination weighing apparatus 10 has have the same configuration, so one vibratory conveyance device 100 will be described here.

The vibratory conveyance device 100 mainly has a trough 110, a vibrator 200, and a mounting mechanism 140. The vibratory conveyance device 100 uses the vibrator 200 to vibrate the trough 110 and convey the article in the trough 110.

### (2-1) Trough

The trough 110 receives the articles and conveys the received articles.

The trough 110 extends between a first end 112 and a second end 114. In this embodiment, the trough 110 conveys the articles from the first end 112 side to the second end 114 side. In other words, the first end 112 is disposed upstream of the second end 114 in a conveyance direction A in which the trough 110 conveys the article (hereinafter simply called "the conveyance direction A"). Here, the first end 112 is disposed in the vicinity of the dispersion table 20, and the second end 114 is disposed in the vicinity of the pool hopper 30.

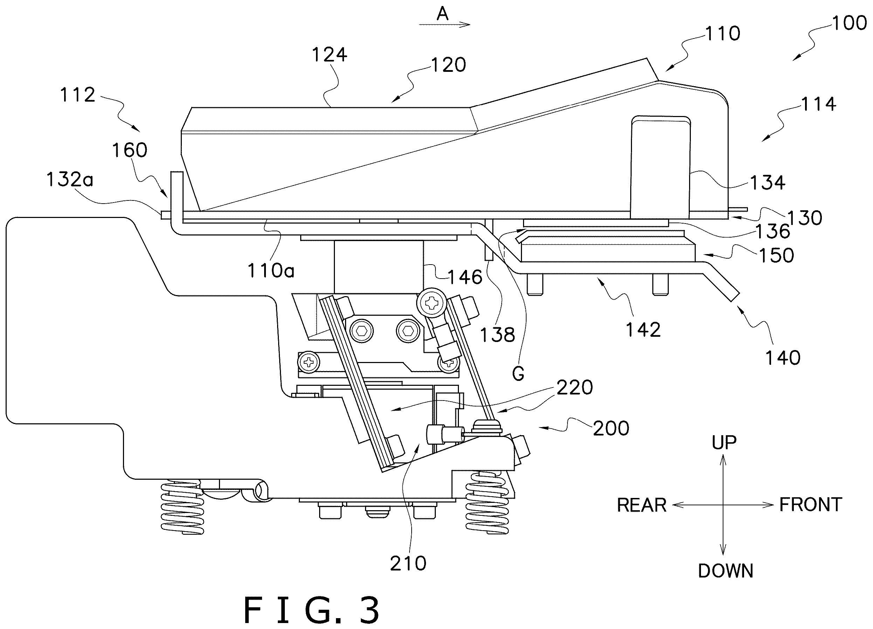

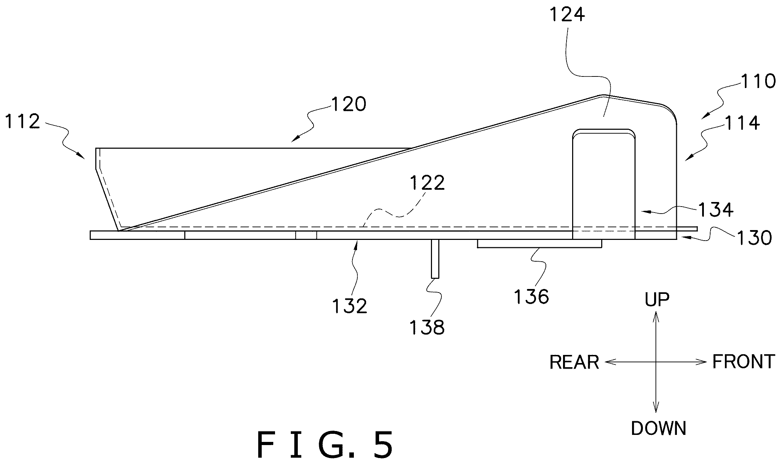

As shown in FIG. 3 to FIG. 5, the trough 110 mainly includes a trough body 120 and a mounting component 130. The mounting component 130 is mounted to the bottom surface of the trough body 120. It will be noted that although here the trough body 120 and the mounting component 130 are described as independent members, the trough body 120 and the mounting component 130 are not limited to this and may also be integrally formed.

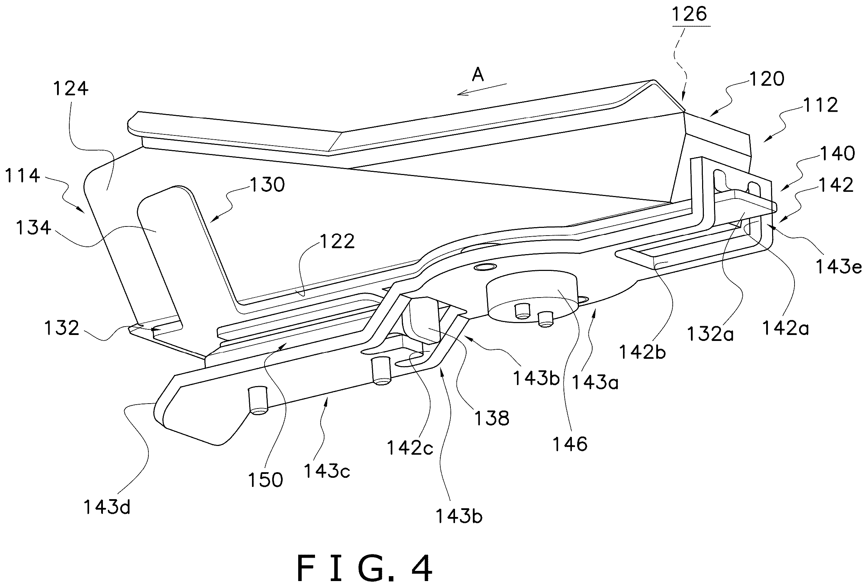

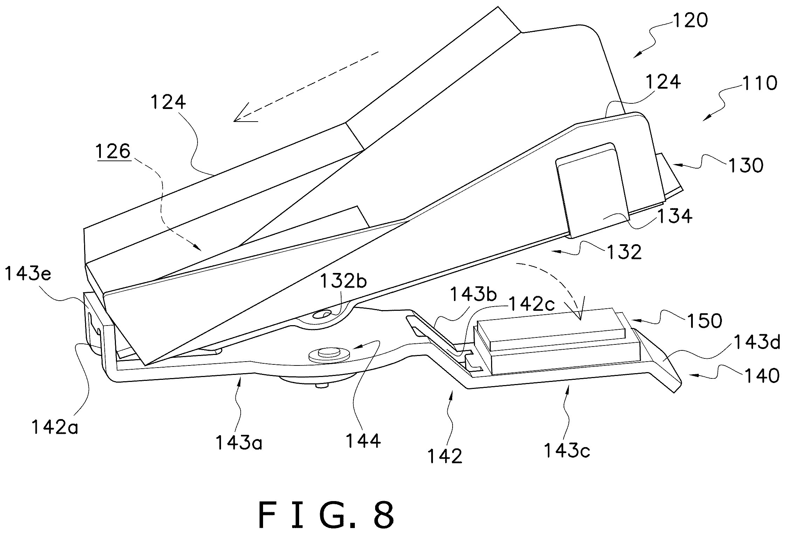

The trough body 120 forms a channel (a conveyance path 126) for conveying the article. Specifically, the trough body 120 mainly has a body bottom surface 122 and body side surfaces 124. In the width direction of the body bottom surface 122 (here, the left and right direction) orthogonal to the conveyance direction A (here, the front and rear direction), the body side surfaces 124 are disposed on both edge portions (here, the left edge portion and the right edge portion) of the body bottom surface 122 and extend generally along the conveyance direction A. With the body bottom surface 122 and the body side surfaces 124, the trough 110 forms the article conveyance path 126 that extends in the conveyance direction A (see FIG. 4 and FIG. 8). When the trough 110 is vibrated by the vibrator 200, the articles proceed: on the conveyance path 126 in the conveyance direction A (forward).

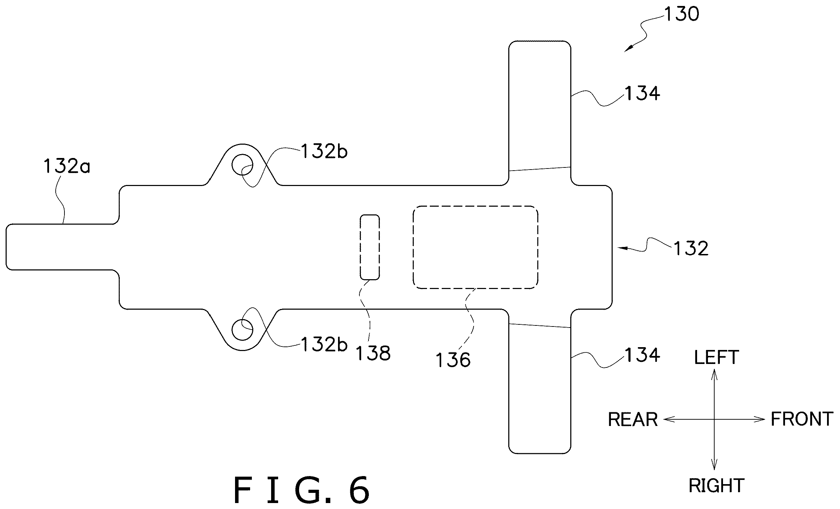

The mounting component 130 is disposed under the trough body 120 and has a mounting component body 132 that is mounted to the bottom surface of the trough body 120. Furthermore, the mounting component 130 may have at least one of a support portion 134 that extends leftward from the left edge portion in the vicinity of the front end portion of the mounting component body 132 and a support portion 134 that extends rightward from the right edge portion in the vicinity of the front end portion of the mounting component body 132 (see FIG. 6). The support portions 134 contact the body side surfaces 124 of the trough body 120 and support the body side surfaces 124. The support portions 134 regulate the position of the trough body 120 in the left and right direction.

A plate 136 is mounted to the bottom surface of the mounting component body 132. The lower surface of the plate 136 mounted to the bottom surface of the mounting component body 132 functions as part of a bottom surface 110a of the trough 110. A magnetic material (e.g., iron) is used for the plate 136. The material of the plate 136 may be selected as appropriate as long as it is a magnetic material. The plate 136 is mounted to the front side of the bottom surface 110a of the trough 110 (forward of the center of the trough 110 in the front and rear direction) so that when the trough 110 has been mounted via the mounting mechanism 140 to the vibrator 200, the position of a magnet 150 of the mounting mechanism 140 described below and the position of the plate 136 correspond to each other (so that the plate 136 is disposed directly above the magnet 150 of the mounting mechanism 140). When the trough 110 has been mounted to the vibrator 200, the magnet 150 of the mounting mechanism 140 attracts and holds the trough 110 by attracting the bottom surface 110a (the plate 136) of the trough 110 in a contactless state. It will be noted that when the mounting component body 132 is itself a magnetic body, the separate plate 136 need not be used.

The rear portion of the mounting component body 132 is provided with an insertion portion 132a that extends in the front and rear direction. The insertion portion 132a is mainly used for aligning the mounting position of the trough 110 relative to the mounting mechanism 140 and inhibiting positional shifting of the trough 110 relative to the mounting mechanism 140 (when the vibratory conveyance device 100 is in use) in the width direction of the trough 110 (here, the left and right direction). Specifically, the position of the trough 110 having the insertion portion 132a is regulated in the left and right direction as a result of the insertion portion 132a being latched by a latching portion 160 of the mounting mechanism 140. It will be noted that the insertion portion 132a may be provided on the trough body 120 (in a higher position than the bottom surface of the trough body 120). The structure of the latching portion 160 will be described below.

The mounting component body 132 may be provided with one or a plurality of insertion holes 132b that penetrate the mounting component body 132 in its thickness direction. In the example of FIG. 6, two insertion holes 132b are provided in mutually symmetrical positions in the width direction of the mounting component body 132 (here, the left and right direction), though this is not intended to limit the positions of the insertion holes 132b. When mounting the trough 110 via the mounting mechanism 140 to the vibrator 200, corresponding positioning pins 144, which are provided so as to project upward from the upper surface of the mounting mechanism 140, are inserted into these insertion holes 132b. By utilizing the positioning pins 144 and the insertion holes 132b in this way, position displacement of the trough 110 in the front and rear direction and the left and right direction is easily inhibited. It will be noted that it is preferred that the insertion holes 132b and the positioning pins 144 corresponding to the insertion holes 132b be provided in plural numbers in order to inhibit rotation of the trough 110 about the positioning pins 144. It will be noted that instead of the aspect described above, positioning pins may be provided on the mounting component body 132, and insertion holes may be provided in the mounting mechanism 140.

The lower surface of the mounting component body 132 (in other words, the bottom surface 110a of the trough 110) may be provided with a protrusion 138. The protrusion 138 is disposed between the magnet 150 (described below) provided on the mounting mechanism 140 and the first end 112 of the trough 110 in the conveyance direction A when the trough 110 has been mounted via the mounting mechanism 140 to the vibrator 200 (see FIG. 3 and FIG. 4). In other words, here, the protrusion 138 is disposed upstream of the magnet 150 in the conveyance direction A when the trough 110 has been mounted via the mounting mechanism 140 to the vibrator 200.

Furthermore, the protrusion 138 extends downward below a first horizontal portion 143a described below when the trough 110 has been mounted via the mounting mechanism 140 to the vibrator 200 (see FIG. 3). Furthermore, the protrusion 138 extends downward bellow the upper surface of the magnet 150 when the trough 110 has been mounted via the mounting mechanism 140 to the vibrator 200 (see FIG. 3). It will be noted that when the magnet 150 is coated with a coating member 152 as described below, the protrusion 138 may extend downward below the upper surface of the coating member 152 (not extend as far as the upper surface of the magnet 150) when the trough 110 has been mounted via the mounting mechanism 140 to the vibrator 200. Furthermore, when a cover member 154 is provided above the magnet 150, the protrusion 138 may extend downward below the upper surface of the cover member 154 (not extend as far as the upper surface of the magnet 150) when the trough 110 has been mounted via the mounting mechanism 140 to the vibrator 200. Specifically, the protrusion 138 is disposed so as to be inserted through an opening 142c formed in a mounting base 142 of the mounting mechanism 140 when the trough 110 has been mounted via the mounting mechanism 140 to the vibrator 200.

### (2-2) Mounting Mechanism

The mounting mechanism 140 is a mechanism that detachably mounts the trough 110 to the vibrator 200. Using the mounting mechanism 140 to detachably mount the trough 110 to the vibrator 200 makes it is easy to perform maintenance such as cleaning the trough 110.

The mounting mechanism 140 mainly has a mounting base 142 and a magnet 150.

The bottom surface of the mounting base 142 is connected to the vibrator 200 at a connecting portion 146, and when the vibrator 200 generates vibrations, the mounting base 142 vibrates. The mounting mechanism 140 mounts the trough 110 to the vibrator 200 as a result of a latching portion 160 of the mounting base 142 latching the first end 112 side of the trough 110 (the insertion portion 132a provided on the first end 112 side of the trough 110 being inserted into an opening 142a (described below) serving as the latching portion 160) and the magnet 150 attracting and holding, in a contactless state, the bottom surface 110a (the plate 136) on the second end 114 side of the trough 110.

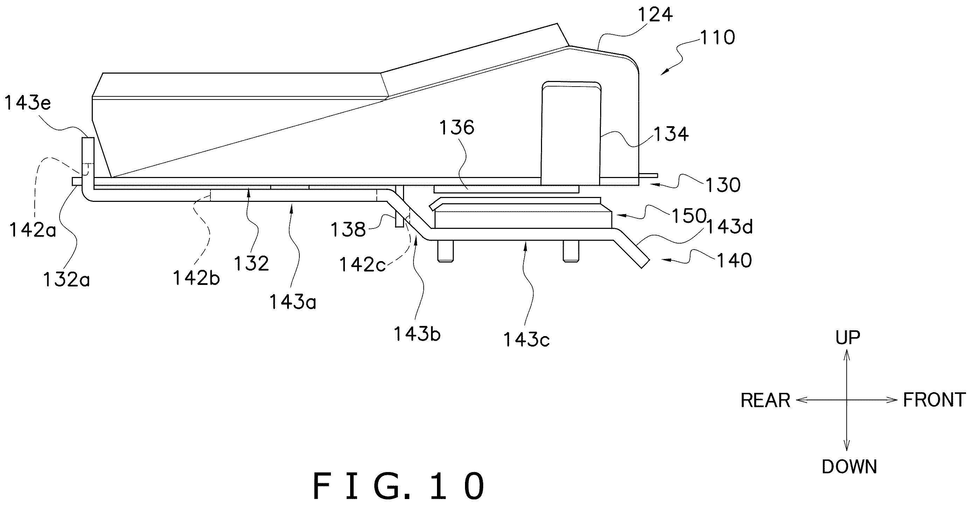

The mounting base 142 is, for example, a member formed by bending a tabular member. Though this is not intended to be limiting, the mounting base 142 has the following shape as viewed from the side (see FIG. 10).

The mounting base 142 mainly includes a first horizontal portion 143a, an inclined portion 143b, a second horizontal portion 143c, a grip portion 143d, and an upright portion 143e. The first horizontal portion 143a extends horizontally from the rear end portion of the mounting base 142 to the vicinity of the center of the mounting base 142. The inclined portion 143b extends obliquely forward and downward from the front end of the first horizontal portion 143a. The second horizontal portion 143c extends horizontally from the front end of the inclined portion 143b toward the front end portion of the mounting base 142. The second horizontal portion 143c extends horizontally in a lower position than the first horizontal portion 143a. The grip portion 143d, which extends forward and downward from the front end of the second horizontal portion 143c, is provided on the front end portion of the mounting base 142. The upright portion 143e, which extends upward from the rear end of the first horizontal portion 143a, is provided on the rear end portion of the mounting base 142.

The upright portion 143e is provided with an opening 142a serving as a receiving portion that is an example of a latching portion 160 (see FIG. 4). The opening 142a is provided so as to penetrate the upright portion 143e in its thickness direction. The width of the opening 142a in the left and right direction is generally equal to the width of the insertion portion 132a in the left and right direction so as to be able to regulate movement of the insertion portion 132a of the mounting component 130 that has been inserted. However, the width of the opening 142a in the left and right direction is designed slightly larger than the width of the insertion portion 132a in the left and right direction to allow the insertion portion 132a to be inserted. In the first horizontal portion 143a, a guide opening 142b that communicates with the opening 142a is provided so as to extend in the front and rear direction. The guide opening 142b is provided so as to penetrate the first horizontal portion 143a in its thickness direction. The width of the guide opening 142b in the left and right direction is equal to the width of the opening 142a in the left and right direction However, the width of the guide opening 142b in the left and right direction is not limited to this and may be larger than the width of the opening 142a in the left and right direction.

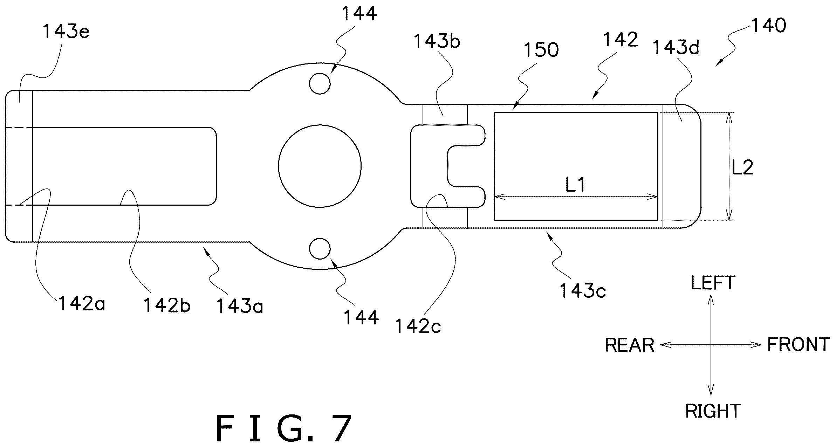

The first horizontal portion 143a is provided with positioning pins 144 that are inserted into the insertion holes 132b of the mounting component body 132 of the trough 110 (see FIG. 7). Though this is not intended to limited their shapes, the shape of the positioning pins 144 is tubular, for example, and the insertion holes 132b are circular holes corresponding to the outer shapes of the positioning pins 144. However, the shapes of the positioning pins 144 and the insertion holes 132b are not limited to the above example and, for example, may be selected as appropriate so that movement of the positioning pins 144 relative to the insertion holes 132b is easily inhibited when the vibratory conveyance device 100 is in operation.

In the mounting base 142, an opening 142c is provided so as to straddle the vicinity of the front end of the first horizontal portion 143a, the inclined portion 143b, and the vicinity of the rear end of the second horizontal portion 143c (see FIG. 7). The opening 142c is an opening through which is inserted the protrusion 138 that extends downward from the bottom surface 110a of the trough 110. The opening 142c is formed so as to penetrate the mounting base 142 in its thickness direction.

On the second horizontal portion 143c of the mounting base 142, which is disposed lower than the first horizontal portion 143a of the mounting base 142, is disposed the magnet 150 that attracts and holds the second end 114 side of the bottom surface 110a of the trough 110 (particularly in this embodiment the lower surface of the plate 136 mounted to the bottom surface of the mounting component body 132). It will be noted that when mounting the trough 110 via the mounting mechanism 140 to the vibrator 200, the magnet 150 does not attract and hold the trough 110 in a state in which it contacts the bottom surface 110a of the trough but attracts and holds the trough 110 in a state in which the bottom surface 110a of the trough 110 and the magnet 150 are not in contact with each other. In other words, when the trough 110 has been mounted via the mounting mechanism 140 to the vibrator 200, a gap G is present between the upper surface of the magnet 150 (when a cover member 154 is provided as described below, the upper surface of the cover member 154) and the bottom surface 110a of the trough 110. Here, providing the second horizontal portion 143c that is disposed lower than the first horizontal portion 143a and providing the magnet 150 on the second horizontal portion 143c makes it easy to realize a structure in which the gap G is formed between the upper surface of the magnet 150 and the bottom surface 110a of the trough 110.

The magnet 150 will now be described in greater detail including also the detailed configuration around the magnet 150.

It is preferred that a length L1 of the magnet 150 along the conveyance direction A of the article in the trough 110 be longer than a length L2 of the magnet 150 in the width direction of the trough 110 orthogonal to the conveyance direction A (see FIG. 7).

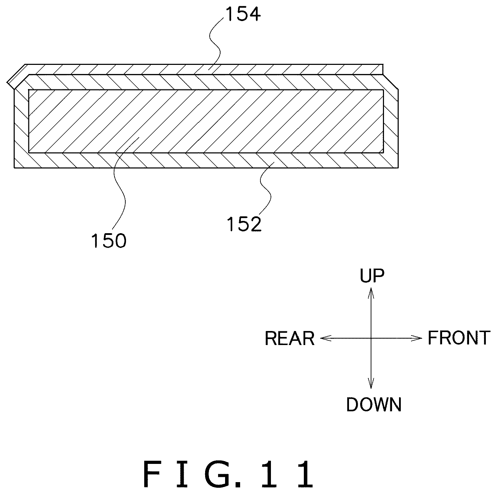

The magnet 150 is, for example, a neodymium magnet, though this is not intended to limit the type of the magnet 150. A neodymium magnet can rust and corrode over time, so the magnet 150 may be coated with a coating member 152 made of resin as shown in FIG. 11 to inhibit rust and the like. The coating member 152 is, for example, a silicone resin or an epoxy resin, though this is not intended to limit its material. However, the coating for inhibiting rust and the like of the magnet 150 is not limited to a coating using the coating member 152 made of resin and may also be a metal coating such as nickel plating.

Furthermore, a nonmagnetic cover member 154 may be provided between the trough 110 and the coating (e.g., the coating member 152) of the magnet 150 (on the upper surface of the magnet 150). The cover member 154 is made of nonmagnetic SUS 304, though this is not intended to be limiting. Providing the cover member 154 on the magnet 150 can reduce dust accumulation in mounting holes (not shown in the drawings) provided in the upper surface of the magnet 150 for disposing bolts and screws (not shown in the drawings) for securing the magnet 150 to the mounting base 142 and damage to the coating member 152 caused by the trough 110 contacting the coating member 152 when mounting the trough 110 to and detaching it from the vibrator 200. It will be noted that, although the drawings do not show this, it is preferred that the magnet 150 be secured in two or more places along the conveyance direction A when securing the magnet 150 to the mounting base 142.

In this way, when the coating member 152 is provided on the magnet 150 and/or when the cover member 154 is provided with respect to the magnet 150, the trough 110 is not in contact with the coating member 152 and the cover member 154. That is, when the trough 110 has been mounted via the mounting mechanism 140 to the vibrator 200, the magnet 150 attracts and holds the trough 110 in a state in which the bottom surface 110a of the trough 110 (particularly in this embodiment the lower surface of the plate 136) does not contact the coating member 152 or the cover member 154.

### (2-3) Vibrator

The vibrator 200 is a device that vibrates the trough 110 mounted thereto via the mounting mechanism 140.

The vibrator 200 is a device that mainly has an electromagnetic coil 210 and leaf springs 220, for example, and produces linear vibrations utilizing the attractive force generated by the electromagnetic coil 210 and the restoring force of the leaf springs 220 when the attractive force of the electromagnetic coil 210 ceases, though this is not intended to limit the type of the vibrator 200. In other words, the vibratory conveyance device 100 of this invention may be an electromagnetic feeder. It will be noted that the type of the vibrator 200 may be selected as appropriate in accordance with its application.

### (3) Mounting of Trough to and Detachment of Trough from Vibrator using Mounting Mechanism

The mounting of the trough 110 to and the detachment of the trough 110 from the vibrator 200 using the mounting mechanism 140 will now be described.

When mounting the trough 110 to the vibrator 200, a worker first inserts the insertion portion 132a of the trough 110 into the opening 142a serving as the latching portion 160 of the mounting mechanism 140.

At this time, the worker may insert the insertion portion 132a, which extends in the front and rear direction, into the opening 142a by moving the trough 110 just horizontally. The guide opening 142b need not be formed if the worker inserts the insertion portion 132a into the opening 142a in this way.

However, it may be difficult to move the trough 110 horizontally (while maintaining the trough 110 in a generally horizontal state) and insert the insertion portion 132a into the relatively small opening 142a. Furthermore, since the protrusion 138 is present on the bottom surface 110a of the trough 110 of the above embodiment, if the worker moves the trough 110 horizontally, the protrusion 138 may come into contact with the magnet 150 (or the coating member 152 when the magnet 150 is coated with the coating member 152) and/or the cover member 154 and hinder the movement of the trough 110.

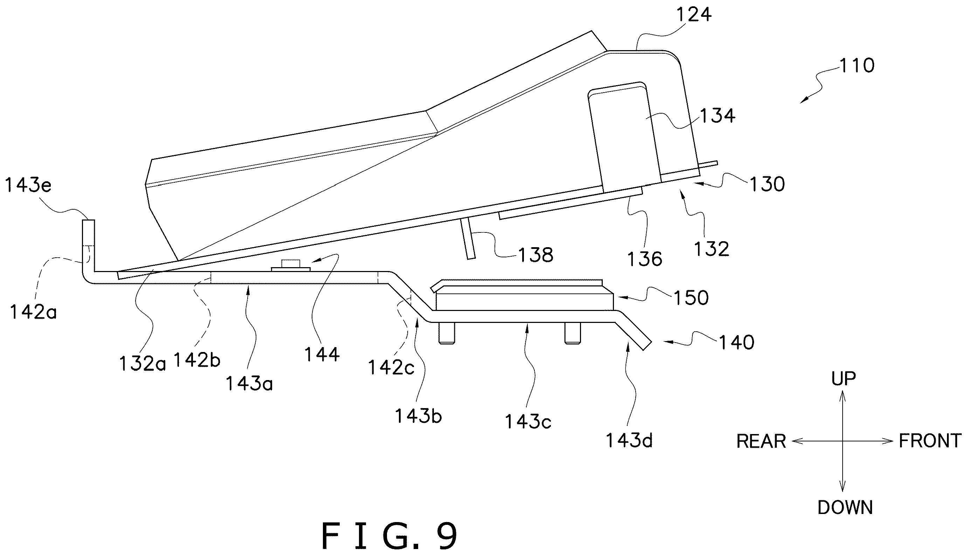

Thus, in this embodiment, the worker tilts the trough 110 so that the rear side of the trough 110 becomes lower than the front side (see FIG. 8 and FIG. 9), inserts the insertion portion 132a of the trough 110 into the guide opening 142b of the mounting mechanism 140, and moves the trough 110 so that the insertion portion 132a moves in the guide opening 142b to the opening 142a. When the worker inserts the insertion portion 132a of the trough 110 into the opening 142a in this way, the insertion portion 132a can be relatively easily latched in the latching portion 160.

It will be noted that in this embodiment, in the combination weighing apparatus 10 in which the plural vibratory conveyance devices 100 are arranged next to each other in the circumferential direction, the first end 112 side of the trough 110 provided with the insertion portion 132a that latches in the latching portion 160 is disposed on the dispersion table 20 side. When mounting the trough 110 to the combination weighing apparatus 10, the worker performs work from the outer side of the combination weighing apparatus 10 (the side where the hoppers 30, 40 are disposed) due to space constraints. For that reason, if the latching portion 160 were disposed on the side where the hoppers 30, 40 are disposed, the work of inserting the insertion portion 132a of the trough 110 into the opening 142a of the latching portion 160 would be difficult to perform because it would be difficult for the worker to see the opening 142a. However, here, since the latching portion 160 is disposed on the dispersion table 20 side, the insertion portion 132a can be inserted into the opening 142a relatively easily.

In this embodiment, position displacement of the trough 110 in the front and rear direction when mounting the trough 110 to the vibrator 200 can be inhibited by the protrusion 138 of the bottom surface 110a of the trough 110 for the following reasons.

When the trough 110 is disposed forward of its correct position, the lower end of the protrusion 138 comes into contact with the magnet 150 (or the coating member 152 when the magnet 150 is coated with the coating member 152) and/or the cover member 154. Furthermore, if the trough 110 is moved rearward of its correct position, the protrusion 138 comes into contact with the first horizontal portion 143a of the mounting base 142 because the protrusion 138 is in a lower position than the first horizontal portion 143a of the mounting base 142. For that reason, when the trough 110 is not disposed in its correct position in the front and rear direction, the trough 110 cannot be mounted to the mounting base 142.

In contrast, as shown in FIG. 10, by returning to a generally horizontal state the trough 110 that has been tilted so that its rear side was lower than its front side in the position where the protrusion 138 of the bottom surface 110a of the trough 110 enters the opening 142c of the mounting base 142 and mounting the trough 110 to the mounting base 142, the trough 110 can be disposed in its correct position relative to the mounting base 142.

Detachment of the trough 110 from the vibrator 200 is performed by the reverse procedure of what has been described above (i.e., tilting the generally horizontal trough 110 so that its front side is higher than its rear side and then pulling the insertion portion 132a that had been inserted into the opening 142a out from the opening 142a).

It will be noted that in a state in which the trough 110 is mounted to the vibrator 200, the bottom surface 110a of the trough 110 (in this embodiment, the bottom surface of the plate 136) is attracted and held by the magnet 150 in a contactless state, so when one grabs just the trough 110 and tries to lift up the front side of the trough 110 relative to the rear side, it may be difficult to pull the trough 110 off of the mounting mechanism 140. However, in this vibratory conveyance device 100, the worker can smoothly detach the trough 110 from the vibrator 200 by gripping the grip portion 143d provided on the front end portion of the mounting base 142 and lifting up the front side of the trough 110 relative to the rear side.

### (4) Characteristics

(4-1)
The vibratory conveyance device 100 has the trough 110 that conveys the article, the vibrator 200, and the mounting mechanism 140. The trough 110 extends between the first end 112 and the second end 114. The vibrator 200 vibrates the trough 110 to convey the article in the trough 110. The mounting mechanism 140 detachably mounts the trough 110 to the vibrator 200. The mounting mechanism 140 has the latching portion 160 and the magnet 150. The latching portion 160 latches the first end 112 side of the trough 110. The magnet 150 attracts and holds the bottom surface 110a on the second end 114 side of the trough 110. In a case where the trough 110 has been mounted to the vibrator 200, the magnet 150 attracts and holds the trough 110 without contacting the bottom surface 110a of the trough 110.

It will be noted than in a case where the magnet 150 is coated with the coating member 152, when the trough 110 has been mounted to the vibrator 200, the magnet 150 attracts and holds the trough 110 without the bottom surface 110a of the trough 110 and the coating member 152 contacting each other. Furthermore, in a case where the cover member 154 is provided above the magnet 150, when the trough 110 has been mounted to the vibrator 200, the magnet 150 attracts and holds the trough 110 without the bottom surface 110a of the trough 110 and the cover member 154 contacting each other.

In the vibratory conveyance device 100, using the magnet 150 to attract and hold the bottom surface 110a of the trough 110 on the side of the second end 114 can reduce the area of contact between the trough 110 and the mounting mechanism 140 and thus reduce wear of parts associated with contact between the trough 110 and the mounting mechanism 140.

Furthermore, because the vibratory conveyance device 100 is configured in this way, a situation where debris from wear of parts associated with contact between the trough 110 and the mounting mechanism 140 gets mixed in with the article handled by the combination weighing apparatus 10 is also inhibited.

(4-2)
In the vibratory conveyance device 100, the length L1 of the magnet 150 along the conveyance direction A of the article in the trough 110 is longer than the length L2 of the magnet 150 in the width direction of the trough 110 orthogonal to the conveyance direction A.

Because the vibratory conveyance device 100 is configured in this way, the trough 110 can be strongly held by the magnet 150 in the conveyance direction A. Furthermore, in this vibratory conveyance device 100, the width of the magnet 150 in the width direction of the trough 110 can be relatively small, so an increase in the size of the vibratory conveyance device 100 in the width direction of the trough 110 can be inhibited.

(4-3)
The vibratory conveyance device 100 has the coating member 152 made of resin that coats the magnet 150.

In the vibratory conveyance device 100, coating the magnet 150 with the coating member 152 made of resin can inhibit oxidation of the magnet 150 and thus inhibit a reduction in the attractive force of the magnet 150.

(4-4)
The vibratory conveyance device 100 has the nonmagnetic cover member 154 that is disposed between the trough 110 and the coating member 152. It will be noted that even in a case where the coating member 152 is not provided, the cover member 154 may be provided between the trough 110 and the magnet 150.

Because the vibratory conveyance device 100 is configured in this way, damage to the coating member 152 caused by the trough 110 and the coating member 152 contacting each other or damage to the magnet 150 caused by the trough 110 and the magnet 150 contacting each other when the trough 110 is mounted to and detached from the mounting mechanism 140 can be inhibited.

(4-5)
In the vibratory conveyance device 100, the trough 110 has the protrusion 138 on its bottom surface 110a. The protrusion 138 extends downward below the upper surface of the magnet 150.

Because the vibratory conveyance device 100 is provided with the protrusion 138, if the position of the trough 110 is misaligned in a direction parallel to the conveyance direction A when mounting the trough 110 to the mounting mechanism 140, the protrusion 138 will contact the magnet 150 and the trough 110 will be unable to be correctly mounted to the mounting mechanism 140, so incorrect mounting of the trough 110 is unlikely to occur.

(4-6)
In the vibratory conveyance device 100, the latching portion 160 is the opening 142a that receives the insertion portion 132a provided on the trough 110.

Because the vibratory conveyance device 100 is configured in this way, position displacement of the trough 110 can be inhibited with a relatively simple structure.

It will be noted that the kind of structure to be employed as the latching portion may be decided as appropriate.

For example, in a case where the insertion portion 132a is bent back forward and downward in a hook shape, a latching portion that can catch this hook-shaped part may be provided on the mounting base 142.

(4-7)
The combination weighing apparatus 10 includes the troughs 110, the plural weighing hoppers 40, and the control device 70. The troughs 110 are mounted to the vibrators 200 by the mounting mechanisms 140. The plural weighing hoppers 40 temporarily retain and discharge the articles supplied from the troughs 110. The control device 70 acquires, as weighing values, the masses of the articles retained in the plural weighing hoppers 40 which is acquired by the weight sensors 42 provided in the plural weighing hoppers 40. The control device 70 utilizes the weighing values measured by the weight sensors 42 to perform a combination calculation and makes the combination weighing apparatus 10 discharge the retained articles from the weighing hoppers 40 decided on by the combination calculation (selected so that the total of the weights of the contents of the weighing hoppers 40 falls within a predetermined allowable range).

### (5) Example Modifications

### (5-1) Example Modification A

In the above embodiment, the combination weighing apparatus 10 in which the troughs 110 of the plural vibratory conveyance devices 100 are arranged so as to extend radially from the dispersion table 20 was described as an example of an apparatus to which the vibratory conveyance device 100 is applied. However, the apparatus to which the vibratory conveyance device 100 is applied is not limited to the combination weighing apparatus 10 of the above embodiment and may be a combination weighing apparatus in which a plurality of the vibratory conveyance devices 100 are arranged next to each other in a direction orthogonal to the direction in which the troughs 110 extend, so that the troughs 110 of the plural vibratory conveyance devices 100 extend parallel to each other.

Furthermore, the vibratory conveyance device 100 may be used in applications other than for use in a combination weighing apparatus.

### REFERENCE SIGNS LIST

- 100: Vibratory Conveyance Device
- 110: Trough
- 112: First End
- 114: Second End
- 132a: Insertion Portion
- 138: Protrusion
- 140: Mounting Mechanism
- 142a: Opening (Receiving Portion)
- 150: Magnet
- 152: Coating Member
- 154: Cover Member
- 160: Latching Portion
- 200: Vibrator

### CITATION LIST

### Patent Literature

Patent Document 1: JP-U No. H1-147320

## Claims

1. A vibratory conveyance device comprising:
a trough extending between a first end and a second end and configured to convey an article;
a vibrator configured to vibrate the trough to convey the article in the trough; and
a mounting mechanism detachably mounting the trough to the vibrator,
wherein
the mounting mechanism has a latching portion that latches the first end side of the trough and a magnet configured to attract and hold a bottom surface of the trough on the second end side, and
in a state where the trough has been mounted to the vibrator, the magnet attracts and holds the trough without contacting the bottom surface of the trough.

2. The vibratory conveyance device according to claim 1, wherein the trough is configured to convey the article from the first end side to the second end side.

3. The vibratory conveyance device according to claim 1 or 2, wherein a length of the magnet along a conveyance direction of the article in the trough is longer than a length of the magnet in a width direction of the trough orthogonal to the conveyance direction.

4. The vibratory conveyance device according to any one of claims 1 to 3, further comprising a coating member made of resin that coats the magnet.

5. The vibratory conveyance device according to claim 4, further comprising a nonmagnetic cover member that is disposed between the trough and the coating member.

6. The vibratory conveyance device according to any one of claims 1 to 5, wherein the trough has a protrusion on its bottom surface that is disposed between the magnet and the first end in a conveyance direction of the article in the trough and extends downward below an upper surface of the magnet.

7. The vibratory conveyance device according to any one of claims 1 to 6, wherein the latching portion is a receiving portion configured to receives an insertion portion provided on the trough.
